# EUROPÄISCHE PATENTSCHRIFT

(11) **EP 2 435 737 B1**
(45) Veröffentlichungstag und Bekanntmachung des Hinweises auf die Patenterteilung: **07.08.2013**
(21) Anmeldenummer: 10713847.1
(22) Anmeldetag: 13.04.2010
(51) Int. Cl.: F16K 27/02, F16K 31/06, B05C 5/02

(54) **VENTIL, INSBESONDERE LEIMVENTIL**
VALVE, PARTICULARLY GLUE VALVE
SOUPAPE, EN PARTICULIER SOUPAPE POUR COLLE

(30) Priorität: 25.05.2009 DE 102009022496
(43) Veröffentlichungstag der Anmeldung: 04.04.2012
(73) Patentinhaber: Focke & Co. (GmbH & Co. KG), 27283 Verden (DE)
(72) Erfinder: JÜRGENS, Eric, 10435 Berlin (DE); HOPPE, Reinhard, 21395 Tespe (DE)
(74) Vertreter: Ellberg, Nils
(86) Internationale Anmeldenummer: PCT/EP2010/002253
(87) Internationale Veröffentlichungsnummer: WO 2010/136096

(56) Entgegenhaltungen:
- DE-A1- 3 841 474
- DE-A1-102007 029 064
- US-A- 3 811 601
- US-A- 4 962 871

## Beschreibung

Die Erfindung betrifft ein Ventil für fließfähige Medien, insbesondere Leimventil (Leimdüse) mit einem in einem Ventilgehäuse durch einen Elektro-Magneten bewegbaren Ventilstößel, der mit einem Verschlussstück in Schließstellung an einem Ventilsitz anliegt, wobei eine über einen Elektro-Anschluss oder -Stecker mit Strom versorgte Spule auf einem Spulenkörper den (teilweise) Ventilstößel umgibt.

Ein derartiges Ventil ist in DE 10200702964 A1 dargestellt und beschrieben. Eine Besonderheit dieses bekannten (Leim-)Ventils besteht darin, dass das Verschlussorgan bzw. der Ventilstößel durch innerhalb des Ventilgehäuses angeordnete Dauermagneten in Schließstellung beaufschlagt ist. Der Elektromagnet dient zur Bewegung des Ventilstößels in die Öffnungsstellung gegen die Schließkraft der Dauermagneten.

Der Erfindung liegt die Aufgabe zugrunde, ein Ventil, insbesondere Leimventil, der eingangs beschriebenen Ausführung dahingehend weiterzuentwickeln, dass ein kompakter Aufbau, eine leistungsfähige Arbeitsweise und eine einfache Montage gewährleistet sind.

Zur Lösung dieser Aufgabe ist das erfindungsgemäße Ventil durch folgende Merkmale gekennzeichnet:
a) das Ventilgehäuse ist an wenigstens einer Seite mindestens über eine Teilhöhe bzw. Teillänge offen unter Bildung einer nach oben offenen Seitenöffnung,
b) wenigstens ein Ventilanschluss, insbesondere der Stecker, ist an einem gesonderten (Anschluss-)Träger angebracht und neben dem Ventilgehäuse positioniert,
c) der (Anschluss-)Träger ist über das offene Ende der Seitenöffnung in das Ventilgehäuse einführbar und tritt seitwärts über die Seitenöffnung aus dem Ventilgehäuse aus.

Eine Besonderheit ist die aus Spule, Spulenkern und Stecker gebildete Einheit, die separat vorgefertigt und aufgrund der an einer Seite durchgehenden, offenen Seitenöffnung in das Ventilgehäuse (von oben) eingeführt werden kann, derart, dass Spulenkörper und Spule sich innerhalb des Gehäuses bzw. der Gehäusekammer und der einstückig mit dem Spulenkörper verbundene Stecker seitlich neben dem Ventilgehäuse befindet.

Eine weitere Besonderheit ist die Ausbildung des Ventilstößels, insbesondere in Verbindung mit einem anschließenden bolzenförmigen Verschlussorgan des Gehäuses in Verlängerung des Ventilstößels. Dieser ist im Querschnitt mit einer Profilierung versehen unter Bildung von in Längsrichtung verlaufenden Nuten, insbesondere bei sechskantiger Ausbildung. Entsprechend ist der in Axialrichtung anschließende Bolzen bzw. ein Dauermagnet ausgebildet, also ebenfalls mit in Längsrichtung verlaufenden Nuten.

Ein Ausführungsbeispiel des Ventils ist in den Zeichnungen dargestellt. Es zeigt:
- Fig. 1: ein Ventil, insbesondere Leimventil in perspektivischer Darstellung,
- Fig. 2: das Leinventil gemäß Fig. 1 im Vertikalschnitt in der Schnittebene II-II der Fig. 1,
- Fig. 3: das Leimventil in einem Horizontalschnitt gemäß Schnittebene III-III der Fig. 2,
- Fig. 4: das Leimventil mit den Einzelteilen als Explosionszeichnung.

Das gezeigte Ventil ist vorzugsweise als Leimventil einsetzbar zur Übertragung von verhältnismäßig kleinen Leimportionen auf Faltlappen von Packungen, insbesondere Zigarettenpackungen. Das Leimventil ist auf hohe Taktzahlen ausgelegt.

Die Funktionsteile des Leimventils sind in einem Grundkörper, Ventilblock bzw. Ventilgehäuse 10 angeordnet bzw. an dieses Ventilgehäuse 10 angesetzt. Das Ventil wird elektromagnetisch betätigt. Innerhalb des Ventilgehäuses 10, nämlich in einem hier runden bzw. (teil-)zylindrischen Gehäuse-Innenraum 11 ist ein Elektromagnet angeordnet, bestehend aus einer Spule 12 und einem Spulenträger bzw. Spulenkern 13.

Der hier als Formstück ausgebildete Spulenkern 13 bildet ein mittiges, zylindrisches Tragstück, das Teil einer Ventilkammer 14 ist. Innerhalb der mittigen Öffnung des Spulenkerns 13 bzw. in der Ventilkammer 14 ist ein Verschluss- bzw. Dosierorgan des Ventils bewegbar angeordnet, nachfolgend als Ventilstößel 15 bezeichnet. Dieser ist mit einem innerhalb des Spulenkerns 13 liegenden Führungsteil und unten mit einem Schaft geringeren Querschnitts versehen. An diesem ist als Verschlussorgan eine Kugel 16 als Verschlussmittel für eine Düsenöffnung 17 angebracht. Die Kugel 16 besteht insbesondere aus Keramik. Die Ventilöffnung 17 ist mittig im Bereich eines trichterförmigen Ventilsitzes 18 angebracht. Die Kugel 16 liegt in Schließstellung an konischen Sitzflächen an. Der Ventilsitz 18 ist ein gesondertes Formteil, welches über ein Innengewinde 19 lösbar in das Ventilgehäuse 10 eingesetzt ist. Mittels O-Ring 20 wird die erforderliche Dichtung erzielt.

Das Ventil besteht aus mehreren durch wechselseitigen, formschlüssigen Eingriff zusammengesetzten Bauteilen. Bei dem vorliegenden Ausführungsbeispiel sind zwei Haupt-Bauteile zu dem Ventil miteinander verbunden, nämlich einerseits das blockförmig ausgebildete Ventilgehäuse 10 (aus Metall) und andererseits aus einer Spuleneinheit 21 mit Spulenkern 13, Spule 12 und einem Elektroanschuss bzw. Stecker 22. Der Spulenkern 13 besteht aus einem zylindrischen Innenteil bzw. Kernmantel 23 als Träger der Spule 12. An freien Enden (oben, unten) sind quergerichtete, kreisförmige Ringe 24, 25 angebracht bzw. einstückig angeformt. Die Spule 12 ist zwischen den Ringen 24, 25 gelagert. Die Einheit aus Spule 12 und Spulenkern 13 sitzt in dem im Wesentlichen zylindrischen Gehäuse-Innenraum 11.

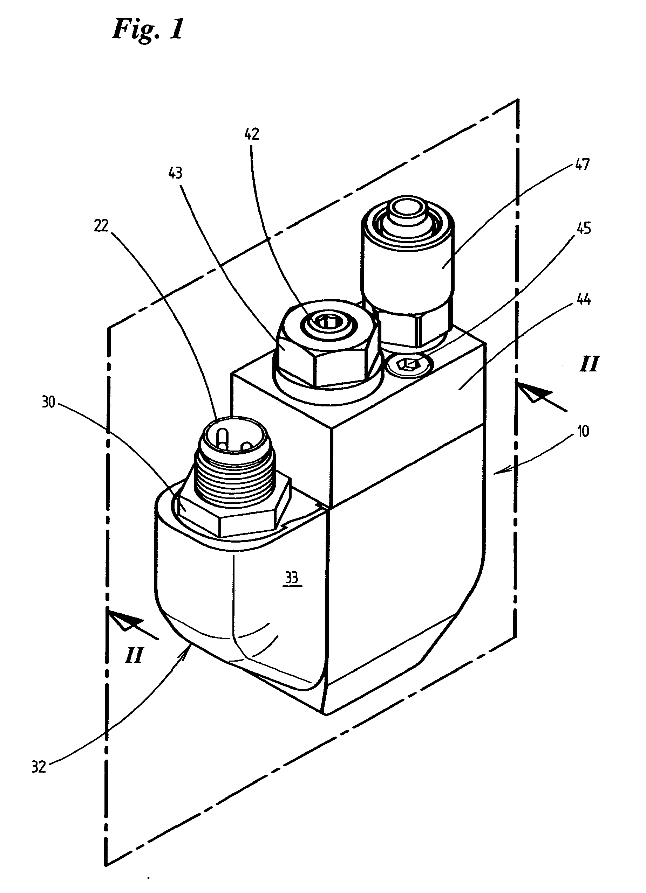

Der Stecker 22 als Anschluss für die Stromversorgung und Steuerung des Ventils ist ein gesondertes Bauteil, welches mit dem Spulenkern 13 zu einer Einheit verbunden ist, nämlich zu der Spuleneinheit 21. Der obere bzw. vom Ventilsitz 18 abliegende Ring 24 ist mit einem seitlich aus dem Ventilgehäuse 10 bzw. dem Ventilkörper herausragenden Tragteil für den Stecker 22 versehen, nämlich einem queraxial gerichteten Tragsteg 26. Dieser ist vorzugsweise Teil des Spulenkerns 13 bzw. des Rings 24, nämlich einstückig mit diesem verbunden. Der quergerichtete Tragsteg 26 weist eine (kreisförmige) Ausnehmung 27 auf. In dieser ist der Stecker 22 angeordnet, und zwar mit einem Anschlussstück 28 mit Außengewinde. Das Anschlussstück 28 weist die in Fig. 1 dargestellten Verbindungsteile für einen elektrischen Anschluss auf. Innerhalb bzw. unterhalb des Tragstegs 26 ist ein Stützflansch 29 gebildet, der in Verbindung mit einer äußeren Feststellschraube 30 den Stecker 22 klemmend am Tragsteg 26 fixiert, und zwar in Verbindung mit einer Ringdichtung 31.

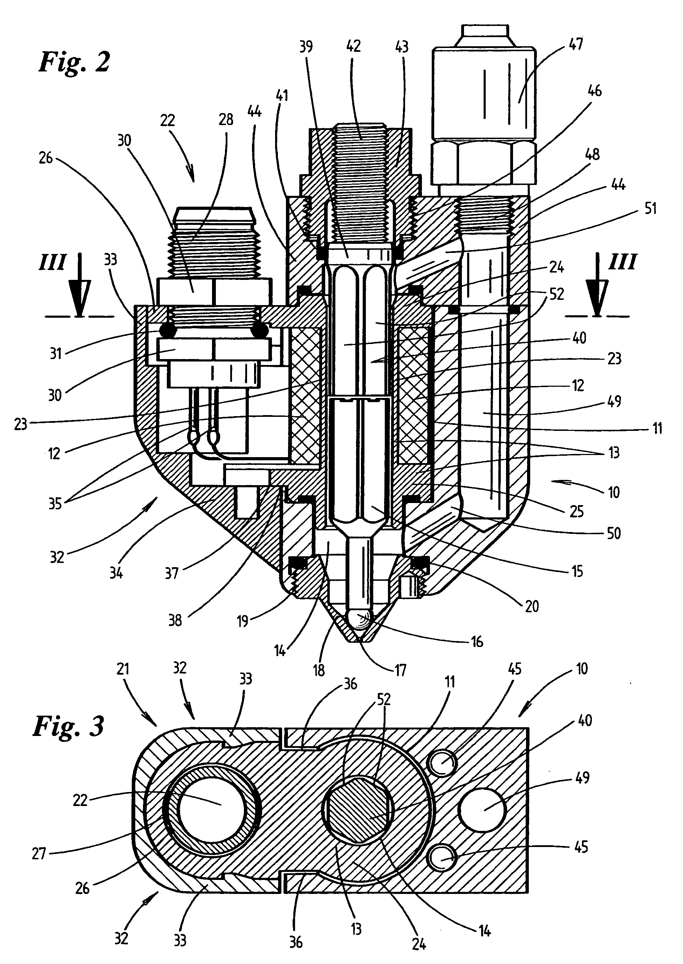

Der Tragsteg 26 ist Teil eines Steckergehäuses 32. Dieses besteht vorzugsweise aus Kunststoff und ist der Kontur des Ventils angepasst, besteht nämlich aus einer im Querschnitt U-förmigen Seitenwand 33 und einer schräg in Richtung zum Ventilsitz 18 führenden Bodenwand 34. Der Tragsteg 26 bildet die obere Abdeckung des Steckergehäuses 32. Dieses ist mit dem Tragsteg 26 formschlüssig mit einrastenden Vorsprüngen und Vertiefungen (Fig. 3) und/oder durch Klebung verbunden. Das Steckergehäuse 32 schmiegt sich an die Kontur des Ventilgehäuses 10 an und ist im Bereich von Anlageflächen mit dem Ventilgehäuse 10 durch Klebung verbunden.

Innerhalb des Steckergehäuses 32 sind Organe des Steckers 22 angebracht, insbesondere elektrische Leitungen 35, die über die offene Seite des Steckergehäuses 32 zur Spule 12 führen, hier in deren unterem Bereich.

In besonderer Weise ist auch das Ventilgehäuse 10 bzw. der Ventilkörper ausgebildet. Der überwiegend zylindrische Gehäuse-Innenraum 11 ist mindestens in einem Teilbereich, nämlich zur Seite des Steckers 22, offen unter Bildung einer Seitenöffnung 36 des Ventilgehäuses 10. Die Seitenöffnung 36 erstreckt sich mindestens im Bereich des Tragstegs 26 für den Stecker 22, sodass dieses Verbindungsorgan aus dem Ventilgehäuse 10 seitlich austritt, um den Stecker 22 (oder ein anderes Organ) zu erfassen.

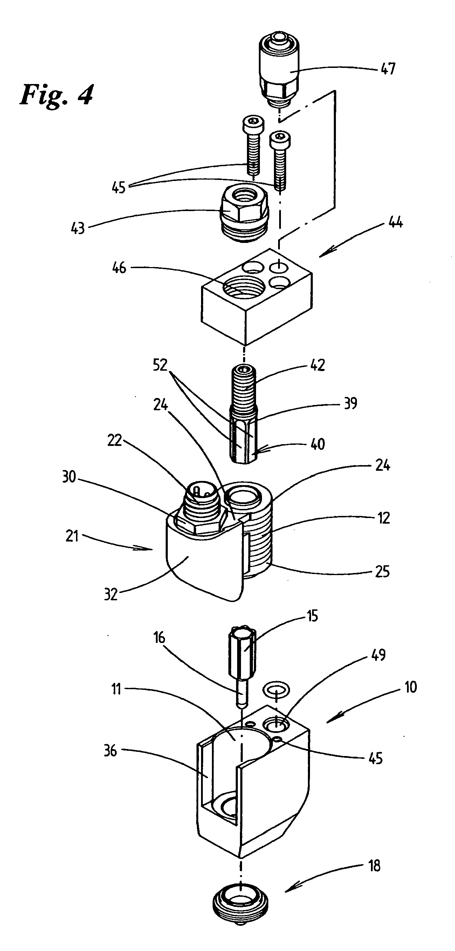

Vorliegend ist das Ventilgehäuse 10 etwa über die volle Länge bzw. Höhe der Spuleneinheit 21 bzw. des Spulenkerns 13 offen (Fig. 4, unten). Dadurch kann ein im Bereich des (unteren) Ringes 25 des Spulenkerns 13 seitlich angebrachter Vorsprung 37 in den Bereich des Steckergehäuses 32 eintreten, und zwar unter Anlage an einem Gegenvorsprung 38 des Steckergehäuses 32. Die beiden Organe 37, 38 bilden demnach miteinander korrespondierende Stütz- bzw. Justierorgane für eine korrekte Relativstellung zwischen dem Spulenkern 13 und dem Steckergehäuse 32.

Ein wichtiges Merkmal des Ventils besteht darin, dass die Seitenöffnung 36 nach oben offen ist (auf der zum Ventilsitz 18 gegenüberliegenden Seite), und zwar zu Montagezwecken. Die Spuleneinheit 21 kann so über die offene Seite in das Ventilgehäuse 10 eingeführt werden, wobei die Spule 12 mit dem Spulenkern 13 den Gehäuse-Innenraum 11 im Wesentlichen passend, formschlüssig ausfüllt (Fig. 3). Teile der Spuleneinheit 21 treten in die Seitenöffnung 36 ein bzw. durch diese hindurch. Letzteres gilt vorliegend für den Tragsteg 26 und gegenüberliegend für den Vorsprung 37. Diese Teile sind so bemessen, dass sie den Querschnitt der Seitenöffnung 36 ausfüllen (Fig. 3). Die Abmessung der Seitenöffnung 36 ist so gewählt, dass die Spuleneinheit 21 bzw. der Spulenkern 13 in einem Bereich von mehr als 180° umschlossen ist. Dadurch sitzt die Spuleneinheit 21 formschlüssig im Gehäuseinnenraum.

Die Ventilkammer 14 ist auf der zum Ventilsitz 18 gegenüberliegenden (oberen) Seite durch einen verstellbaren Verschluss abgesperrt, nämlich durch einen zylindrischen Kopf 39, der über das freie Ende in die Ventilkammer 14 passend eintritt. Der bolzenförmige Kopf 39 ist zugleich Träger für einen Dauermagneten 40, der mit einem Gegenmagneten an der benachbarten Seite des Ventilstößels 15 zusammenwirkt. Der Kopf 39 bildet mit einem O-Ring eine Abdichtung bzw. Dichtung 41 des Ventil-Innenraums nach außen.

Der Kopf 39 ist in Längsrichtung der Ventilkammer 14 verstellbar. Zu diesem Zweck ist eine Verlängerung des Kopfes 39 als Gewindebolzen 42 ausgebildet. Dieser ist in einem (mittelbar) mit dem Ventilgehäuse 10 verbundenen, feststehenden Träger 43 mit Innengewinde verstellbar. Am freien Ende des Gewindebolzens 42 ist eine Ausnehmung angebracht zum Ansetzen eines Werkzeugs, zum Beispiel eines Inbus-Schlüssels.

Eine Besonderheit ist auch die Zuführung des zu verarbeitenden Mediums, also insbesondere die Leimzufuhr. Hierzu ist an der Oberseite - auf der zum Ventilsitz 18 gegenüberliegenden Seite - ein Leimanschluss 47 für eine Leimleitung angebracht. Dieser befindet sich im Bereich des Ventilgehäuses 10 bzw. des Ventilkörpers, vorliegend auf der zum Stecker 22 gegenüberliegenden Seite, vorzugsweise in einer gemeinsamen Mittelebene mit dem Kopf 39 und dem Stecker 22. Der Leimanschluss 47 ist mittels Gewinde in einer Bohrung 48 des Deckels 44 fixiert. An diesen schließt - mit Dichtungsring - ein Leimkanal 49 an, der sich im Wesentlichen achsparallel zur Ventilkammer 14 erstreckt. In einem (unteren) Bereich benachbart zum Ventilsitz 18 ist der Leimkanal 49 über einen schräggerichteten Anschlusskanal 50 mit der Ventilkammer 14 verbunden, und zwar in einem Bereich unmittelbar oberhalb des Ventilsitzes 18. Die Leitungen für den Leim umgehen somit den Spulenkern 13 und münden im Bereich eines reduzierten Querschnitts des Ventilstößels 15, unterhalb des Spulenkerns 13.

Bei der Montage des Ventils wird zweckmäßiger Weise so vorgegangen, dass die Spuleneinheit 21 (mit Stecker) in den Gehäuse-Innenraum 12 über die offene Seite eingesetzt wird. Danach wird die Magneteinheit in die Öffnung des Spulenkerns 13, also in die Ventilkammer 14 eingeführt. Sodann wird der Deckel 44 auf das Ventilgehäuse 10 aufgesetzt und mit diesem verbunden. Es folgt die Fixierung des Trägers 43, nämlich einerseits die Verbindung mit dem Deckel 44 und andererseits mit dem Gewindebolzen 42. Sodann wird der Leimanschluss 48 am Deckel 44 befestigt.

Der Ventilstößel 15 kann von der gegenüberliegenden (unteren) Seite her in die Ventilkammer 14 eingeführt werden, bevor der Ventilsitz 18 mittels Gewinde in die Position gebracht wird. Alternativ kann der Ventilstößen 15 auch von der gegenüberliegenden Seite eingeführt werden, nämlich bevor der Verschluss 39, 40 in die Ventilkammer eingeführt wird.

Die hier aus Dauermagnet 40, Kopf 39 und Gewindebolzen 42 bestehende Einheit dient als verstellbarer Hubbegrenzer des Ventilstößels 15. Die gesamte Einheit ist leicht auswechselbar. Zu diesem Zweck ist lediglich der als Schraube ausgebildete Träger 43 mittels Drehbewegung abzunehmen. Dadurch können auf einfache Weise die beanspruchten und verschleißbelasteten Teile ausgewechselt werden. Unerwünschte Drehbewegungen der Einheit 40, 39, 42 werden durch eine geringe Gewindesteigung sowie durch die ringförmige Dichtung 41 verhindert.

Der als Verschlussbolzen ausgebildete Dauermagnet 40 und der nach unten bzw. zur Ventilöffnung 17 anschließende Ventilstößel 15 sind mit besonderem Profil ausgebildet, nämlich derart, dass in Längsrichtung des Verschlussbolzens bzw. des Dauermagneten 40 Nuten 52 verlaufen. Diese erstrecken sich bis in den Bereich des zylindrischen Kopfes 39. Vorzugsweise ist der Dauermagnet 40 im Querschnitt sechseckig bzw. sechskantig ausgebildet (Fig. 3) unter Schaffung entsprechender Nuten 52 gegenüber der zylindrischen Wandung der Ventilkammer 14. In entsprechender oder analoger Weise ist der Ventilstößel 15 im Bereich des zylindrischen Teils der Ventilkammer 14 ausgebildet. Durch die Nuten kann Leim in Längsrichtung fließen.

Die Nuten 52 sind von besonderer Bedeutung in Verbindung mit der Zuführung des Leims. Hierzu ist der parallel zur Ventilkammer 14 verlaufende Leimkanal 48 vorgesehen mit einem (ersten) Anschlusskanal 50 im Bereich der erweiterten Ventilkammer 14. Mindestens ein weiterer Leimkanal, nämlich ein Zusatzkanal 51, erstreckt sich zwischen dem Leimkanal 49 und der Ventilkammer 14. Der Zusatzkanal 51 mündet im Bereich des Dauermagneten 40, und zwar im Bereich der Nuten 52 am Umfang dieses Ventilteils. Zur besseren Leimzuführung kann darüber hinaus das Gehäuse, nämlich der Deckel 44 und gegebenenfalls der Ring 24 mit einer ringsherumlaufenden Erweiterung versehen sein, sodass in diesem Bereich der Ventilinnenraum einen größeren Querschnitt aufweist.

Über die Leimkanäle 50, 51 können unterschiedliche Anteile des Leims zugeführt werden. Insbesondere gelangt über den Zusatzkanal 51 eine geringere Menge an Leim, z.B. 40%, in das Ventil als über den Anschlusskanal 50,

### Bezugszeichenliste

| | | | |
|---|---|---|---|
| 10 | Ventilgehäuse | 39 | Kopf |
| 11 | Gehäuse-Innenraum | 40 | Dauermagnet |
| 12 | Spule | 41 | Dichtung |
| 13 | Spulenkern | 42 | Gewindebolzen |
| 14 | Ventilkammer | 43 | Träger |
| 15 | Ventilstößel | 44 | Deckel |
| 16 | Kugel | 45 | Kopfschraube |
| 17 | Ventilöffnung | 46 | Ausnehmung |
| 18 | Ventilsitz | 47 | Leimanschluss |
| 19 | Innengewinde | 48 | Bohrung |
| 20 | O-Ring | 49 | Leimkanal |
| 21 | Spuleneinheit | 50 | Anschlusskanal |
| 22 | Stecker | 51 | Zusatzkanal |
| 23 | Kernmantel | 52 | Nut |
| 24 | Ring | | |
| 25 | Ring | | |
| 26 | Tragsteg | | |
| 27 | Ausnehmung | | |
| 28 | Anschlussstück | | |
| 29 | Stützflansch | | |
| 30 | Feststellschraube | | |
| 31 | Ringdichtung | | |
| 32 | Steckergehäuse | | |
| 33 | Seitenwand | | |
| 34 | Bodenwand | | |
| 35 | Leitung | | |
| 36 | Seitenöffnung | | |
| 37 | Vorsprung | | |
| 38 | Gegenvorsprung | | |

## Patentansprüche

1. Ventil für fließfähige Medien, insbesondere Leimventil, mit einem Ventilgehäuse (10), durch einen Elektro-Magneten bewegbaren Organ, wie Ventilstößel (15), der mit einem Verschlussstück (16) in Schließstellung an einem Ventilsitz (18) anliegt, wobei eine über einen Elektroanschluss oder -stecker (22) mit Strom versorgte Spule (12) auf einem Spulenkörper (13) den Ventilstößel (15) mindestens teilweise umgibt, **gekennzeichnet durch** folgende Merkmale:
a) das Ventilgehäuse (10) ist an wenigstens einer Seite mindestens über eine Teilhöhe bzw. Teillänge offen unter Bildung einer Seitenöffnung (36), derart, dass ein Gehäuse-innenraum (11) im Bereich der Seitenöffnung (36) offen ist,
b) die Seitenöffnung (36) ist auch an der zum Ventilsitz (18) gegenüberliegenden Seite des Ventilgehäuses (10) offen,
c) wenigstens ein Ventilanschluss, insbesondere der Stecker (22), ist an einem gesonderten Träger angebracht und neben dem Ventilgehäuse (10) positioniert,
d) der Träger ist über die oben offene Seitenöffnung (36) in den Bereich des Ventilgehäuses (10) einführbar.

2. Ventil nach Anspruch 1, **gekennzeichnet durch** ein oberes Verschluss- bzw. Tragstück, insbesondere **durch** einen leicht lösbaren Deckel (44), **durch** den der Spulenkörper bzw. Spulenkern (13) in dem Ventilgehäuse (10) fixiert ist und der als Träger für einen verstellbaren Abschluss der Ventilkammer (14) und vorzugsweise für weitere Funktionsorgane, insbesondere für einen Leimanschluss (47) dient.

3. Ventil nach Anspruch 1 oder 2, **dadurch gekennzeichnet, dass** der Stecker (22) an einem quergerichteten Tragsteg (26) angebracht und dieser im Ventilhäuse (10) verankert ist, vorzugsweise durch einstückige Verbindung mit dem Spulenkern (13), sodass Spulenkern (13) mit Spule (12) und Tragsteg (26) mit Stecker (22) eine Spuleneinheit (21) bilden.

4. Ventil nach Anspruch 3, **dadurch gekennzeichnet, dass** der Spulenkern (13) aus einem inneren, zylindrischen Kernmantel (23) und quergerichteten Flanschen bzw. Ringen (24, 25) an beiden Enden des Kernmantels (23) besteht, wobei der Tragsteg (26) einteilig mit dem Ring (24) verbunden ist.

5. Ventil nach Anspruch 4, **gekennzeichnet durch** folgende Merkmale:
a) das Ventilgehäuse (10) weist einen im Querschnitt insbesondere kreisförmigen Gehäuse-Innenraum (11) auf, in dem der entsprechend kreisförmig ausgebildete Spulenkern (13) passend angeordnet ist,
b) die Seitenöffnung (36) des Ventilgehäuses (10) erstreckt sich etwa über die Länge bzw. Höhe des Spulenkerns (13), wobei ein Teilumfang des Spulenkerns (13) sich im Bereich der Seitenöffnung (36) erstreckt,
c) der Spulenkern (13) ist **durch** den Deckel (44) im Bereich des oberen Rings (24) beaufschlagt, derart, dass der untere Ring (25) gegen Vorsprünge im Ventilgehäuse (10) bzw. im Gehäuse-Innenraum (11) gedrückt ist.

6. Ventil nach Anspruch 1 oder einem der weiteren Ansprüche, **dadurch gekennzeichnet, dass** zur verstellbaren Anordnung eines Verschlussorgans für die Ventilkammer (14) bzw. für einen Kopf (39) am Deckel (44) ein Halteorgan angebracht ist, insbesondere ein Träger (43), der lösbar in einer Ausnehmung des Deckels (44) angeordnet ist, wobei das Verschlussorgan der Ventilkammer (14) bzw. der Kopf (39) mit einem Gewindebolzen (42) in einem Innengewinde aufweisenden Durchtritt des Trägers (43) gelagert ist.

7. Ventil nach Anspruch 2, **dadurch gekennzeichnet, dass** der Deckel (44) einen Durchgang für einen Leimzuführungsanschluss aufweist, insbesondere eine Bohrung (48) mit Innengewinde zum lösbaren Anbringen eines Leimanschlusses (47), wobei an den Leimanschluss (47) bzw. an die Bohrung (48) im Ventilgehäuse (10) ein Leimkanal (49) anschließt, der außerhalb des Bereichs des Gehäuse-Innenraums (11) bis in einen Bereich benachbart zum Ventilsitz (18) verläuft und hier über einen Anschlusskanal (50) in der Ventilkammer (14) mündet.

8. Ventil nach Anspruch 1 oder einem der weiteren Ansprüche, **dadurch gekennzeichnet, dass** der Stecker (22) in einem gesonderten Gehäuse, nämlich Steckergehäuse (32) angeordnet ist, welches im Bereich der Seitenöffnung (36) seitlich an das Ventilgehäuse (10) angesetzt und zum Ventilgehäuse (10) offen ist, nämlich aus einer U-förmigen Seitenwand (33) und einer Bodenwand (34) besteht.

9. Ventil nach Anspruch 8, **dadurch gekennzeichnet, dass** der Tragsteg (26) als Träger für den Stecker (22) die Abdeckung des Steckergehäuses (32) bildet, wobei elektrische Leitungen (35) innerhalb des Steckergehäuses (32) vom Stecker (22) zur Spule (12) führen.

10. Ventil nach Anspruch 1 oder einem der weiteren Ansprüche, **dadurch gekennzeichnet, dass** Leim über einen vorzugsweise aufrechten bzw. parallel zum Gehäuse-Innenraum (11) verlaufenden Leimkanal (49) zuführbar ist, der zusätzlich zu einem im Bereich der Ventilkammer (14) mündenden Anschlusskanal (50) mit mindestens einem weiteren Kanal, nämlich Zusatzkanal (51), an den Gehäuse-Innenraum (11) angeschlossen ist, vorzugsweise benachbart zu einem zum Ventilsitz (18) gegenüberliegenden Abschlussorgan des Gehäuse-Innenraums (11).

11. Ventil nach Anspruch 10, **dadurch gekennzeichnet, dass** das dem Ventilsitz (18) gegenüberliegende Abschlussorgan des vorzugsweise zylindrischen Gehäuse-Innenraums (11) aus einem Gewindebolzen (42) besteht, der an einem dem Ventilstößel (15) zugekehrten Bereich einen Dauermagneten (40) aufweist, wobei der Dauermagnet (40) oder eine den Dauermagneten (40) umgebende Ummantelung ein Querschnittsprofil mit in Längsrichtung verlaufenden äußeren Nuten (52) aufweist, insbesondere durch sechskantiges Profil des Dauermagneten (40) bzw. der Ummantelung, und wobei die Nuten (52) so angeordnet sind, dass Leim über den Zusatzkanal (51) in den Gehäuse-Innenraum (11) gelangt.

12. Ventil nach Anspruch 11, **dadurch gekennzeichnet, dass** die an der Außenseite des Dauermagneten (40) bzw. der Ummantelung verlaufenden Nuten (52) mit dem Zusatzkanal (51) für die Leimversorgung verbunden sind, derart, dass ein vorzugsweise geringerer Anteil von Leim über den Zusatzkanal (51) und die Nuten (52) am Außenmantel des Dauermagneten (40) in den Gehäuse-Innenraum (11) gelangt.

13. Ventil nach Anspruch 11 oder 12, **dadurch gekennzeichnet, dass** der Zusatzkanal (51) im Bereich der Nuten (52) des Verschlussorgans und unterhalb eines zylindrischen, abdichtenden Kopfes (39) im Gehäuse-Innenraum (11) mündet, derart, dass Leim über den Zusatzkanal (51) im Bereich des Verschlussorgans zuführbar und durch die Kanäle bzw. Nuten (52) am Umfang des Dauermagneten (40) in den Gehäuse-Innenraum (11) gelangt

14. Ventil nach Anspruch 11 oder einem der weiteren Ansprüche, **dadurch gekennzeichnet, dass** der Ventilstößel (15) mit in Längsrichtung verlaufenden Nuten (52) versehen ist, insbesondere korrespondierend zum Dauermagneten (40), vorzugsweise durch sechskantige Querschnittsform des Ventilstößels (15).

## Claims

1. A valve for free-flowing media, particularly a glue valve, with a valve housing (10), an element, such as a valve tappet (15), which can be moved by an electromagnet and which butts against a valve seat (18) by way of a closure component (16) in the closed position, wherein a coil (12) on a coil body (13), the coil being supplied with power via an electrical connection or electric plug (22), at least partially encloses the valve tappet (15), **characterized by** the following features:
a) the valve housing (10) is open on at least one side, at least over part of the height or part of the length, to form a side opening (36), such that a housing interior (11) is open in the region of the side opening (36),
b) the side opening (36) is also open on that side of the valve housing (10) which is located opposite the valve seat (18),
c) at least one valve connection, in particular the plug (22), is fitted on a separate carrier and positioned alongside the valve housing (10),
d) the carrier can be introduced into the region of the valve housing (10) via the side opening (36), which is open at the top.

2. The valve as claimed in claim 1, **characterized by** an upper closure component or carrying component, in particular by an easily releasable cover (44), by means of which the coil body or coil core (13) is fixed in the valve housing (10) and which serves as a carrier for an adjustable termination of the valve chamber (14) and preferably for further functional elements, in particular for a glue connection (47).

3. The valve as claimed in claim 1 or 2, **characterized in that** the plug (22) is fitted on a transversely directed carrying crosspiece (26) and the latter is anchored in the valve housing (10), preferably by being connected in one piece to the coil core (13), in which case the coil core (13) with the coil (12) and the carrying crosspiece (26) with the plug (22) form a coil unit (21).

4. The valve as claimed in claim 3, **characterized in that** the coil core (13) comprises an inner, cylindrical core casing (23) and transversely directed flanges or rings (24, 25) at both ends of the core casing (23), wherein the carrying crosspiece (26) is connected in one piece to the ring (24).

5. The valve as claimed in claim 4, **characterized by** the following features:
a) the valve housing (10) has a cross-sectionally, in particular circular housing interior (11), in which the correspondingly circular coil core (13) is fitted,
b) the side opening (36) of the valve housing (10) extends approximately over the length and/or height of the coil core (13), wherein part of the circumference of the coil core (13) extends in the region of the side opening (36),
c) the coil core (13) is subjected to the action of the cover (44) in the region of the upper ring (24) such that the lower ring (25) is pushed against protrusions in the valve housing (10) or in the housing interior (11).

6. The valve as claimed in claim 1 or one of the further claims, **characterized in that,** for the purpose of adjustably arranging a closure element for the valve chamber (14) or for a head (39), the cover (44) has fitted on it a retaining element, in particular a carrier (43), which is arranged in a releasable manner in an aperture in the cover (44), wherein the closure element of the valve chamber (14) or the head (39) is mounted by way of a threaded bolt (42) in an internally threaded through-passage of the carrier (43).

7. The valve as claimed in claim 2, **characterized in that** the cover (44) has a passage for a glue-feed connection, in particular a bore (48) with an internal thread for fitting a glue connection (47) in a releasable manner, wherein the glue connection (47) or the bore (48) in the valve housing (10) is followed by a glue channel (49), which runs outside the region of the housing interior (11) into a region adjacent to the valve seat (18) and opens out here via a connection channel (50) in the valve chamber (14).

8. The valve as claimed in claim 1 or one of the further claims, **characterized in that** the plug (22) is arranged in a separate housing, namely plug housing (32), which is attached laterally to the valve housing (10) in the region of the side opening (36) and is open in the direction of the valve housing (10), that is to say it comprises a U-shaped side wall (33) and a base wall (34).

9. The valve as claimed in claim 8, **characterized in that** the carrying crosspiece (26), as carrier for the plug (22), forms the covering of the plug housing (32), wherein electric lines (35) within the plug housing (32) lead from the plug (22) to the coil (12).

10. The valve as claimed in claim 1 or one of the further claims, **characterized in that** glue can be fed via a glue channel (49) which is preferably upright, or runs parallel to the housing interior (11), and, in addition to a connection channel (50), which opens out in the region of the valve chamber (14), is connected by way of at least one further channel, namely an additional channel (51), to the housing interior (11), preferably adjacent to a closing-off element of the housing interior (11), this element being located opposite the valve seat (18).

11. The valve as claimed in claim 10, **characterized in that** the closing-off element of the preferably cylindrical housing interior (11), this element being located opposite the valve seat (18), comprises a threaded bolt (42), which has a permanent magnet (40) in a region directed toward the valve tappet (15), wherein the permanent magnet (40), or a sheathing enclosing the permanent magnet (40), has a cross-sectional profile with longitudinally running outer grooves (52), in particular as a result of a hexagonal profile of the permanent magnet (40) or of the sheathing, and wherein the grooves (52) are arranged such that glue passes into the housing interior (11) via the additional channel (51).

12. The valve as claimed in claim 11, **characterized in that** the grooves (52), which run on the outside of the permanent magnet (40) or of the sheathing, are connected to the additional channel (51) for the glue supply such that a preferably relatively small amount of glue passes into the housing interior (11) via the additional channel (51) and the grooves (52) in the outer lateral surface of the permanent magnet (40).

13. The valve as claimed in claim 11 or 12, **characterized in that** the additional channel (51) opens out in the region of the grooves (52) of the closure element and beneath a cylindrical, sealing head (39) in the housing interior (11) such that glue can be fed in the region of the closure element via the additional channel (51) and passes into the housing interior (11) through the channels or grooves (52) on the circumference of the permanent magnet (40).

14. The valve as claimed in claim 11 or one of the further claims, **characterized in that** the valve tappet (15) is provided with longitudinally running grooves (52), in particular corresponding to the permanent magnet (40), preferably as a result of the hexagonal cross-sectional shape of the valve tappet (15).

## Revendications

1. Soupape pour des fluides coulants, an particulier soupape pour colle, avec un boîtier de soupape (10), un organe mobile par un électroaimant comme un poussoir de soupape (15), qui s'applique en position fermée avec une pièce de fermeture (16) sur un siège de soupape (18), dans laquelle une bobine (12) sur un corps de bobine (13), alimentée en courant par un raccord ou un connecteur électrique (22), entoure au moins partiellement le poussoir de soupape (15), **caractérisée par** les caractéristiques suivantes:
a) le boîtier de soupape (10) est ouvert sur au moins un côté au moins sur une hauteur partielle ou une longueur partielle en formant une ouverture latérale (36), de telle manière qu'un espace intérieur de boîtier (11) soit ouvert dans la région de l'ouverture latérale (36),
b) l'ouverture latérale (36) est également ouverte sur le côté du boîtier de soupape (10) opposé au siège de soupape (18),
c) au moins un raccord de soupape, en particulier le connecteur (22), est monté sur un support séparé et est positionné à côté du boîtier de soupape (10),
d) le support peut être introduit dans la région du boîtier de soupape (10) par l'ouverture latérale (36) ouverte en haut.

2. Soupape selon la revendication 1, **caractérisée par** une pièce de fermeture ou de support supérieure, en particulier par un couvercle aisément amovible (44), par lequel le corps de bobine ou le noyau de bobine (13) est fixé dans le boîtier de soupape (10) et qui sert de support pour une fermeture réglable de la chambre de soupape (14) et de préférence pour d'autres organes fonctionnels, en particulier pour un raccord à colle (47).

3. Soupape selon la revendication 1 ou 2, **caractérisée en ce que** le connecteur (22) est monté sur une nervure de support orientée transversalement (26) et celle-ci est ancrée dans le boîtier de soupape (10), de préférence par une liaison monobloc avec le noyau de bobine (13), de telle manière que le noyau de bobine (13) avec la bobine (12) et la nervure de support (26) avec le connecteur (22) forment une unité de bobine (21).

4. Soupape selon la revendication 3, **caractérisée en ce que** le noyau de bobine (13) se compose d'une enveloppe de noyau cylindrique intérieure (23) et de brides ou de bagues orientées transversalement (24, 25) aux deux extrémités de l'enveloppe de noyau (23), dans laquelle la nervure de support (26) est assemblée d'une seule pièce à la bague (24).

5. Soupape selon la revendication 4, **caractérisée par** les caractéristiques suivantes:
a) le boîtier de soupape (10) présente un espace intérieur de boîtier (11) de section transversale en particulier circulaire, dans lequel le noyau de bobine (13) de forme circulaire correspondante est disposé en ajustement serré,
b) l'ouverture latérale (36) du boîtier de soupape (10) s'étend environ sur, la longueur ou la hauteur du noyau de bobine (13), une partie du pourtour du noyau de bobine (13) s'étendant dans la région de l'ouverture latérale (36),
c) le noyau de bobine (13) est poussé par le couvercle (44) dans la région de la bague supérieure (24), de telle manière que la bague inférieure (25) soit pressée contre des saillies dans le boîtier de soupape (10) ou dans l'espace intérieur de boîtier (11).

6. Soupape selon la revendication 1 ou l'une quelconque des autres revendications, **caractérisée en ce que**, pour l'agencement réglable d'un organe de fermeture pour la chambre de soupape (14) ou pour une tête (39), un organe de retenue est monté sur le couvercle (44), en particulier un support (43), qui est disposé de façon amovible dans un évidement du couvercle (44), dans laquelle l'organe de fermeture de la chambre de soupape (14) ou de la tête (39) est posé avec un boulon fileté (42) dans un passage du support (43) présentant des filets intérieurs.

7. Soupape selon la revendication 2, **caractérisée en ce que** le couvercle (44) présente un passage pour un raccord d'arrivée de colle, en particulier un perçage (48) avec un filet intérieur pour la pose amovible d'un raccord de colle (47), dans laquelle il se raccorde au raccord de colle (47) ou au perçage (48) dans le boîtier de soupape (10) un canal à colle (49), qui s'étend à l'extérieur de la région de l'espace intérieur de boîtier (11) jusque dans une région adjacente au siège de soupape (18) et débouche ici par un canal de raccordement (50) dans la chambre de soupape (14).

8. Soupape selon la revendication 1 ou l'une quelconque des autres revendications, **caractérisée en ce que** le connecteur (22) est disposé dans un boîtier séparé, à savoir un boîtier de connecteur (32), qui est placé latéralement sur le boîtier de soupape (10) dans la région de l'ouverture latérale (36) et qui est ouvert vers le boîtier de soupape (10), et qui se compose notamment d'une paroi latérale en forme de U (33) et d'une paroi de fond (34).

9. Soupape selon la revendication 8, **caractérisée en ce que** la nervure de support (26), comme support pour le connecteur (22), forme le couvercle du boîtier de connecteur (32), dans laquelle des lignes électriques (35) à l'intérieur du boîtier de connecteur (32) conduisent du connecteur (22) à la bobine (12).

10. Soupape selon la revendication 1 ou l'une quelconque des autres revendications, **caractérisée en ce que** la colle peut être fournie par un canal à colle (49) de préférence vertical ou s'étendant parallèlement à l'espace intérieur de boîtier (11) qui, en plus d'un canal de raccordement (50) débouchant dans la région de la chambre de soupape (14), est raccordé par au moins un autre canal, à savoir un canal additionnel (51), à l'espace intérieur de boîtier (11), de préférence à proximité d'un organe de fermeture de l'espace intérieur de boîtier (11) opposé au siège de soupape (18).

11. Soupape selon la revendication 10, **caractérisée en ce que** l'organe de fermeture de l'espace intérieur de boîtier de préférence cylindrique (11), opposé au siège de soupape (18), se compose d'un boulon fileté (42) qui présente un aimant permanent (40) sur une région tournée vers le poussoir de soupape (15), dans laquelle l'aimant permanent (40) ou une gaine entourant l'aimant permanent (40) présente un profil de section transversale avec des rainures extérieures (52) s'étendant en direction longitudinale, en particulier par un profil hexagonal de l'aimant permanent (40) ou de la gaine, et dans laquelle les rainures (52) sont disposées de telle manière que la colle arrive par le canal additionnel (51) dans l'espace intérieur de boîtier (11).

12. Soupape selon la revendication 11, **caractérisée en ce que** les rainures (52) s'étendant sur le côté extérieur de l'aimant permanent (40) ou de la gaine sont raccordées au canal additionnel (51) pour la fourniture de colle, de telle manière qu'une proportion de préférence plus faible de colle arrive dans l'espace intérieur de boîtier (11) par le canal additionnel (51) et les rainures (52) sur l'enveloppe extérieure de l'aimant permanent (40).

13. Soupape selon la revendication 11 ou 12, **caractérisée en ce que** le canal additionnel (51) débouche dans la région des rainures (52) de l'organe de fermeture et en dessous d'une tête étanche cylindrique (39) dans l'espace intérieur de boîtier (11), de telle manière que la colle puisse être fournie par le canal additionnel (51) dans la région de l'organe de fermeture et arrive dans l'espace intérieur de boîtier (11) par les canaux ou les rainures (52) à la périphérie de l'aimant permanent (40).

14. Soupape selon la revendication 11 ou l'une quelconque des autres revendications, **caractérisée en ce que** le poussoir de soupape (15) est muni de rainures (52) s'étendant en direction longitudinale, correspondant en particulier à l'aimant permanent (40), de préférence par la forme hexagonale de la section transversale du poussoir de soupape (15).
